# EUROPÄISCHE PATENTSCHRIFT

(11) **EP 0 927 620 B1**
(45) Veröffentlichungstag und Bekanntmachung des Hinweises auf die Patenterteilung: **27.03.2002**
(21) Anmeldenummer: 98121117.0
(22) Anmeldetag: 09.11.1998
(51) Int. Cl.: B29C 45/14

(54) **Verfahren zur Herstellung einer Kunststoffschicht**
Method for manufacturing a plastic layer
Procédé pour la fabrication d'une couche en matière plastique

(30) Priorität: 29.12.1997 DE 19758004
(43) Veröffentlichungstag der Anmeldung: 07.07.1999
(73) Patentinhaber: Volkswagen Aktiengesellschaft, 38436 Wolfsburg (DE)
(72) Erfinder: Rauls, Oliver, Dipl.-Ing., 38116 Braunschweig (DE); Henke, Dieter, 29386 Hankensbüttel (DE); Schreiber, Werner, Dr., 38527 Meine (DE)
(74) Vertreter: Schneider, Henry, Dipl.-Ing.

(56) Entgegenhaltungen:
- US-A- 4 049 480
- US-A- 5 243 874
- US-A- 5 640 884

## Beschreibung

Die vorliegende Erfindung betrifft ein Verfahren zur Herstellung einer Kunststoffschicht, insbesondere einer Kunststoffschicht, die zwischen zwei zumindest abschnittsweise ineinander verschiebbaren Teilen angeordnet werden kann, wobei die beiden Teile ein hülsenähnliches Außenteil und ein in dieses zumindest abschnittsweise einschiebbares Innenteil umfassen, und wobei der Querschnitt des Außenteils und/oder des Innenteils im Bereich ihrer ineinander verschiebbaren Abschnitte über deren Länge etwa konstant ist bzw. sind.

Außenteile und Innenteile mit einer dazwischen befindlichen Kunststoffschicht der vorgenannten Art finden beispielsweise Verwendung als Teile einer Lenksäule, die im Falle eines Unfallcrashs ineinander verschiebbar sein soll. Bei einer vorgegebenen maximalen Crash-Verschiebungstiefe muß der Widerstand, mit dem die beiden Teile ineinander verschiebbar sind, genau vorherbestimmt werden. Dieser Widerstand ist abhängig von der Größe der aneinander reibenden Flächen und von deren Oberflächenbeschaffenheit. Die Querschnitte der ineinander verschiebbaren Abschnitte der beiden Teile können unterschiedliche Formen haben, wie beispielsweise die eines flachen Ovals, eines Drei- oder Mehrecks oder auch eines Kreuzes oder Kleeblattes (vergleiche dazu die US-PS 4,622,840).

Da die Form der aneinandergleitenden Flächen sowie die Form der auf eine dieser Flächen aufgebrachten Kunststoffschicht sehr hohen Genauigkeitsanforderungen entsprechen muß, um einen definierten Verschiebewiderstand zu erzielen, erweist sich die Herstellung dieser Kunststoffschicht als sehr schwierig und aufwendig. Es ist beispielsweise bekannt, die Kunststoffschicht als separates einzelnes Teil mit einem Übermaß herzustellen (z. B. durch Kunststoffgießen oder -spritzen), und das Übermaß dann vor dem Aufstecken auf das Innenteil sehr präzise, aber aufwendig durch zerspanende Bearbeitungstechniken definiert wieder abzutragen.

Aus der US-PS 5,640,884 ist bekannt, eine Kunststoffschicht zwischen zwei zumindest abschnittsweise ineinander verschiebbaren Teilen derart herzustellen, daß in ein äußeres Teil radiale Durchgangsbohrungen angeordnet werden, durch die der Kunststoff in einen Zwischenraum zwischen den beiden Teilen eingebracht werden kann. Hierbei ist nachteilig, dass die Teile hierdurch einer mechanischen Bearbeitung unterworfen werden müssen, die einerseits aufwändig ist und andererseits zu einer Materialschwächung führt.

Das der vorliegenden Erfindung zugrunde liegende Problem ist die Entwicklung eines Verfahrens zur Herstellung einer Kunststoffschicht der vorgenannten Art, das einfach durchführbar ist und trotzdem zur Herstellung von Kunststoffschichten geeignet ist, die ineinander verschiebbaren Teilen der vorgenannten Art einen wohldefinierten Verschiebewiderstand verleihen.

Dies wird erfindungsgemäß durch folgende Verfahrensschritte erreicht:
- bei zumindest abschnittsweise in das Außenteil eingeschobenem Innenteil wird der Zwischenraum zwischen Außenteil und Innenteil durch geeignete Dichtelemente abgedichtet;
- durch mindestens eine Öffnung in den Dichtelementen wird der die Kunststoffschicht ausbildende Kunststoff in den Zwischenraum eingespritzt oder hineingezogen.

Auf diese Weise werden die ineinander zu verschiebenden Teile gleichzeitig als (Spritz-)Gußform für die Kunststoffschicht verwendet, so daß die Kunststoffschicht genau an die Form der ineinander zu verschiebenden Teile angepaßt werden kann.

Gemäß einer bevorzugten Ausführungsform der vorliegenden Erfindung können mindestens zwei Öffnungen vorgesehen sein, wobei diese Öffnungen in den Dichtelementen und/oder in dem Abschnitt des Außenteils angeordnet sind, in den der entsprechende Abschnitt des Innenteils eingeschoben ist. Vorzugsweise kann durch eine der Öffnungen der Kunststoff eingespritzt werden, während durch eine andere Öffnung die Luft aus dem Zwischenraum zwischen Außenteil und Innenteil entweicht. Alternativ dazu kann aus einer der Öffnungen die Luft aus dem Zwischenraum zwischen Außenteil und Innenteil gesogen werden, so daß der Kunststoff durch eine andere Öffnung in den Zwischenraum hineingezogen wird.

Vorteilhafterweise können als Dichtelemente zum Beispiel Dichtringe oder aber auch aufblasbare Dichtungen Verwendung finden.

Gemäß einer bevorzugten Ausführungsform der vorliegenden Erfindung wird entweder die Außenseite des in das Außenteil einschiebbaren Abschnitts des Innenteils oder die Innenseite des diesen Abschnitt des Innenteils aufnehmenden Abschnitts des Außenteils so bearbeitet, daß die Kunststoffschicht nach dem Verfahrensschritt des Einspritzens oder Hineinziehens an der so bearbeiteten Oberfläche haftet. Die Oberfläche kann beispielsweise dadurch bearbeitet werden, daß sie aufgerauht wird und/oder mit Vorsprüngen, Dellen oder Noppen versehen wird. Auf diese Weise wird gewährleistet, daß nach dem Einspritzen des Kunststoffs in den Zwischenraum zwischen Außenteil und Innenteil die Kunststoffschicht definiert auf einem der beiden Teile haftet, so daß das Verhalten der Kunststoffschicht beim Verschieben von Innen- und Außenteil gegeneinander definiert vorherbestimmbar ist.

Vorteilhafterweise kann vorgesehen sein, daß mindestens eine Zunge in den Zwischenraum zwischen Außenteil und Innenteil eingeschoben wird, deren Länge vorzugsweise größer als die der ineinander verschiebbaren Abschnitte von Außenteil und Innenteil ist, wobei die mindestens eine Zunge, die vorteilhafterweise aus Metall besteht, nach dem Einspritzen oder Hineinziehen des Kunststoffs wieder aus dem Zwischenraum herausgezogen wird. Auf diese Weise können auf der beispielsweise Außenseite der beispielsweise auf dem Innenteil aufgebrachten Kunststoffschicht Kanäle ausgenommen werden, die die Kontaktfläche der Kunststoffschicht zu der Innenseite des Außenteils verringern. Die Größe der Zunge bzw. der Zungen, die vor dem Einspritzen in den Zwischenraum eingebracht werden, stellen einen einfachen Parameter dar, um den Verschiebewiderstand der beiden Teile gegeneinander zu verändern.

Vorteilhafterweise finden als Kunststoff Polytetraflourethylen (PTFE, auch unter dem Handelsnamen Teflon® bekannt) oder PTFE-Derivate Verwendung. Vorzugsweise sollten bei solchen Kunststoffen als Dichtelemente am Außenteil oder am Innenteil abgestützte Polytetraflourethylenringe verwendet werden, weil bei den entsprechend hohen Einspritztemperaturen von Polytetraflourethylen diese eine gute Dichtigkeit gewährleisten.

Weiterhin können jedoch auch andere Kunststoffe genutzt werden, die vorteilhaft einspritzbar, temperatur- und alterungsbeständig sind sowie gute Gleiteigenschaften aufweisen. Ebenfalls ist eine gewisse Beständigkeit gegen Fette und Öle durchaus von Vorteil.

Weitere Vorteile und Merkmale der vorliegenden Erfindung werden deutlich an Hand der nachfolgenden Beschreibung bevorzugter Ausführungsbeispiele unter Bezugnahme auf die beiliegenden Abbildungen. Darin zeigen
- Fig. 1: einen Querschnitt durch eine Vorrichtung zur Durchführung des erfindungsgemäßen Verfahrens;
- Fig. 2: eine teilweise geschnittene Seitenansicht der in Fig. 1 abgebildeten Vorrichtung.

Die abgebildete Vorrichtung umfaßt ein Außenteil 1 und ein Innenteil 2 einer Lenksäule, die ineinander verschiebbar sind. Eine zwischen diese beiden einzufügende Kunststoffschicht 3 soll nach einer Ausführungsform des erfindungsgemäßen Verfahrens in den Zwischenraum zwischen Außenteil 1 und Innenteil 2 eingespritzt werden, während sich das Innenteil 2 zumindest teilweise in dem Außenteil 1 befindet.

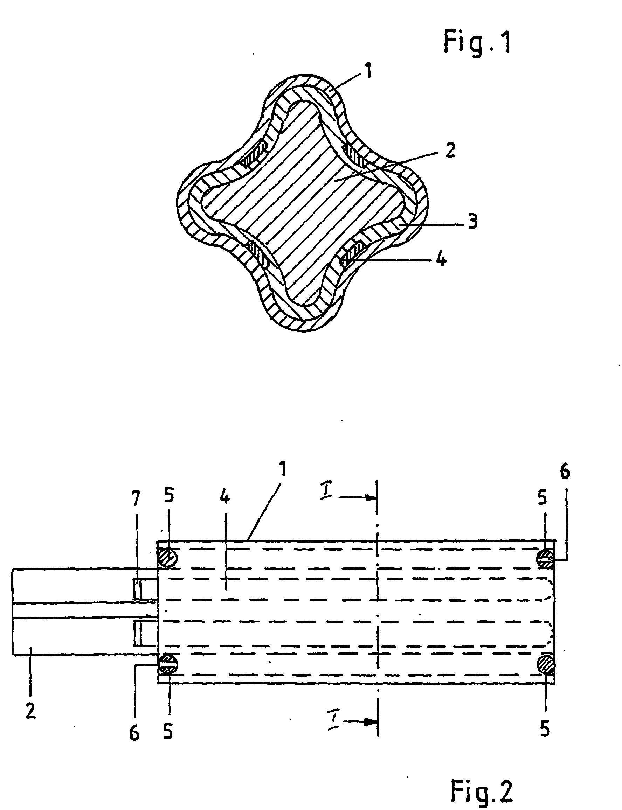

In dem abgebildeten Ausführungsbeispiel weisen Außenteil 1 und Innenteil 2 einen etwa kleeblattförmigen Querschnitt auf. Das Außenteil 1 ist als langgestreckte Hülse ausgeführt, wohingegen das Innenteil 2 in dem abgebildeten Ausführungsbeispiel wie ein massiver Stab gestaltet ist. Zum Zwecke des Ausspritzens werden an den Innenwänden des Außenteils 1 in dieses Dichtelemente 5 eingebracht, die den Zwischenraum zwischen der inneren Wandung des hülsenähnlichen Außenteils 1 und der äußeren Wandung des Innenteils 2 nach außen hin abdichten. Die Dichtelemente 5 können Dichtringe sein, wie dies beispielhaft in Fig. 2 abgebildet ist. Alternativ dazu können als Dichtelemente 5 auch aufblasbare Dichtungen gewählt werden. Ebenso besteht die Möglichkeit, an Vorsprüngen des Außenteils 1 oder Innenteils 2 abgestützte Polytetraflourethylenringe als Dichtungen zu verwenden.

Die Dichtelemente 5 sind mit zwei Öffnungen 6 an unterschiedlichen Enden des hülsenförmigen Außenteils 1 versehen, von denen die eine als Einspritzöffnung für den Kunststoff dient und die andere als Auslaßöffnung für die beispielsweise vorher in dem Zwischenraum befindliche Luft Verwendung findet.

Alternativ zu Öffnungen 6 in den Dichtelementen 5 können auch Öffnungen in dem hülsenförmigen Außenteil 1 in dessen Endbereich angeordnet sein.

Um zu erreichen, daß die auf diese Weise eingespritzte Kunststoffschicht 3 beispielsweise an dem Innenteil 2 haftet, kann dieses vor dem Einspritzen des Kunststoffs entsprechend behandelt werden. Hier bieten sich das Anätzen oder das Anrauhen - z. B. durch Sandstrahlen - der Oberfläche des Innenteils 2 an. Weiterhin besteht auch die Möglichkeit, die Oberfläche des Innenteils 2 mit Vorsprüngen, Dellen oder Noppen zu versehen.

Die Gleiteigenschaften des beispielsweise mit der Kunststoffschicht 3 versehenen Innenteils 2 in Bezug auf das Außenteil 1 sind abhängig von der Größe der Kontaktfläche. Der Gleitwiderstand ist umso größer, je größer die Kontaktfläche ist. Um die Kontaktfläche zu verkleinern, können vor dem Einspritzen der Kunststoffschicht 3 in den Zwischenraum zwischen Außenteil 1 und Innenteil 2 Zungen 4 eingeschoben werden, die nach dem Einspritzen der Kunststoffschicht 3 wieder entfernt werden. Die nach dem Einspritzen der Kunststoffschicht 3 entfernten Zungen 4 hinterlassen Kanäle, die die Kontaktfläche zwischen beispielsweise mit der Kunststoffschicht 3 versehenem Innenteil 2 und Außenteil 1 vermindern. An den Enden der Zungen 4 können vorzugsweise Zugenden 7 angeordnet sein, die ein leichteres Herausziehen der Zungen 4 aus dem Zwischenraum zwischen Außenteil 1 und Innenteil 2 erleichtem.

Die Verminderung der Kontaktfläche kann alternativ dazu durch andere Mittel bewirkt werden. Hier bietet sich beispielsweise nach dem Herausziehen des von der Kunststoffschicht 3 umgebenen Innenteils 2 an, Kanäle in die Oberfläche der Kunststoffschicht 3 zu fräsen oder aus dieser herauszulösen.

Der einzuspritzende Kunststoff sollte vorzugsweise temperatur- und alterungsgeständig sowie möglichst unempfindlich gegen Fette und Öle sein und zudem gute Gleiteigenschaften aufweisen. Hier können beispielsweise Polytetraflourethylen (PTFE, Teflon® ) oder PTFE-Derivate Verwendung finden.

Anstelle des kleeblattförmigen Querschnitts können Außenteil 1 und Innenteil 2 beispielsweise auch einen Querschnitt in Form eines flachen Ovals oder eines beliebigen Drei- oder Mehrecks aufweisen.

Die zweite Öffnung 6 kann auch zum Abziehen des einspritzbaren Kunststoffs Verwendung finden.

Die verwendeten Außen- und Innenteile 1, 2 können beispielsweise aus Stahl, Aluminium oder Magnesium oder deren Legierungen gefertigt sein.

### BEZUGSZEICHENLISTE

- 1: Außenteil
- 2: Innenteil
- 3: Kunststoffschicht
- 4: Zunge
- 5: Dichtring
- 6: Öffnung
- 7: Zugende der Zunge

## Patentansprüche

1. Verfahren zur Herstellung einer Kunststoffschicht (3), die zwischen zwei zumindest abschnittsweise ineinander verschiebbaren Teilen (1, 2) angeordnet werden kann, wobei die beiden Teile ein hülsenähnliches Außenteil (1) und ein in dieses zumindest abschnittsweise einschiebbares Innenteil (2) umfassen, und wobei der Querschnitt des Außenteils (1) und/oder des Innenteils (2) im Bereich ihrer ineinander verschiebbaren Abschnitte über deren Länge etwa konstant ist bzw. sind, **gekennzeichnet durch** folgende Verfahrensschritte:
- bei zumindest abschnittsweise in das Außenteil (1) eingeschobenem Innenteil (2) wird der Zwischenraum zwischen Außenteil (1) und Innenteil (2) **durch** geeignete Dichtelemente (5) abgedichtet;
- **durch** mindestens eine Öffnung (6) wird der die Kunststoffschicht (3) ausbildende Kunststoff in den Zwischenraum eingespritzt oder hineingezogen, wobei die mindestens eine Öffnung (6) in den Dichtelementen (5) angeordnet ist.

2. Verfahren nach Anspruch 1, **dadurch gekennzeichnet, daß** mindestens zwei Öffnungen (6) vorgesehen sind.

3. Verfahren nach einem der Ansprüche 1 bis 2, **dadurch gekennzeichnet, daß** die Öffnung (6) bzw. mindestens eine der Öffnungen (6) in dem Abschnitt des Außenteils (1) angeordnet ist, in den ein Abschnitt des Innenteils (2) eingeschoben ist.

4. Verfahren nach einem der Ansprüche 2 bis 3, **dadurch gekennzeichnet, daß** in eine der Öffnungen (6) der Kunststoff eingespritzt wird, während aus einer anderen Öffnung (6) die Luft aus dem Zwischenraum zwischen Außenteil (1) und Innenteil (2) entweicht.

5. Verfahren nach einem der Ansprüche 2 bis 3, **dadurch gekennzeichnet, daß** durch eine der Öffnungen (6) die Luft aus dem Zwischenraum zwischen Außenteil (1) und Innenteil (2) gesogen wird, so daß der Kunststoff durch eine andere Öffnung (6) in den Zwischenraum hineingezogen wird.

6. Verfahren nach einem der Ansprüche 1 bis 5, **dadurch gekennzeichnet, daß** als Dichtelemente (6) Dichtringe Verwendung finden, die um das Innenteil (2) herum angeordnet sind.

7. Verfahren nach einem der Ansprüche 1 bis 6, **dadurch gekennzeichnet, daß** als Dichtelemente (5) aufblasbare Dichtungen Verwendung finden.

8. Verfahren nach einem der Ansprüche 1 bis 7, **dadurch gekennzeichnet, daß** entweder die Außenseite des in das Außenteil (1) einschiebbaren Abschnitts des Innenteils (2) oder die Innenseite des diesen Abschnitt des Innenteils (2) aufnehmenden Abschnitts des Außenteils (1) so bearbeitet wird, daß die Kunststoffschicht (3) nach dem Verfahrensschritt des Einspritzens oder Hineinziehens an der so bearbeiteten Oberfläche haftet.

9. Verfahren nach Anspruch 8, **dadurch gekennzeichnet, daß** die Oberfläche des einen der beiden Teile (1, 2), auf der die Kunststoffschicht (3) nach dem Aufspritzen haftet, im Bereich der ineinander verschiebbaren Abschnitte durch Aufrauhen bearbeitet wird.

10. Verfahren nach Anspruch 8 oder 9, **dadurch gekennzeichnet, daß** die Oberfläche des einen der beiden Teile (1, 2), auf der die Kunststoffschicht (3) nach dem Aufspritzen haftet, im Bereich der ineinander verschiebbaren Abschnitte durch Versehen mit Vorsprüngen, Dellen oder Noppen bearbeitet wird.

11. Verfahren nach einem der Ansprüche 1 bis 10, **dadurch gekennzeichnet, daß** mindestens eine Zunge (4) in den Zwischenraum zwischen Außenteil (1) und Innenteil (2) eingeschoben wird, deren Länge vorzugsweise größer als die der ineinander verschiebbaren Abschnitte von Außenteil (1) und Innenteil (2) ist, wobei die mindestens eine Zunge (4) nach dem Einspritzen oder Hineinziehen des Kunststoffs wieder aus dem Zwischenraum herausgezogen wird.

12. Verfahren nach Anspruch 11, **dadurch gekennzeichnet, daß** die mindestens eine Zunge (4) aus Metall besteht.

13. Verfahren nach einem der Ansprüche 1 bis 12, **dadurch gekennzeichnet, daß** als Kunststoff Polytetraflourethylen Verwendung findet.

14. Verfahren nach Anspruch 13, **dadurch gekennzeichnet, daß** als Dichtelemente (5) am Außenteil (1) oder Innenteil (2) abgestützte Polytetraflourethylenringe Verwendung finden.

15. Verfahren nach einem der vorhergehenden Ansprüche, **dadurch gekennzeichnet, daß** Außenteil (1) und Innenteil (2) im Bereich ihrer ineinander verschiebbaren Abschnitte einen flachen ovalen Querschnitt aufweisen.

16. Verfahren nach einem der Ansprüche 1 bis 14, **dadurch gekennzeichnet, daß** Außenteil (1) und Innenteil (2) im Bereich ihrer ineinander verschiebbaren Abschnitte einen drei- oder mehreckigen Querschnitt aufweisen.

17. Verfahren nach einem der Ansprüche 1 bis 14, **dadurch gekennzeichnet, daß** Außenteil (1) und Innenteil (2) im Bereich ihrer ineinander verschiebbaren Abschnitte einen etwa kreuzförmigen oder kleeblattförmigen Querschnitt aufweisen.

## Claims

1. A method of manufacturing a layer (3) of plastics material, which can be arranged between two parts (1, 2) displaceable one into the other at least in part, wherein the two parts comprise an outer part (1) similar to a sleeve and an inner part (2) which can be inserted into the latter at least in part, and wherein the cross-section of the outer part (1) and/or of the inner part (2) is or are substantially constant over their length in the region of the portions thereof displaceable one into the other, **characterized by** the following method steps:
- when the inner part (2) is inserted at least in part into the outer part (1) the interspace between the outer part (1) and the inner part (2) is sealed off by suitable sealing members (5), and
- the plastics material forming the plastics-material layer (3) is injected or introduced into the interspace through at least one opening (6), wherein the at least one opening (6) is provided in the sealing members (5).

2. A method according to Claim 1, **characterized in that** at least two openings (6) are provided.

3. A method according to one of Claims 1 and 2, **characterized in that** the opening (6) or at least one of the openings (6) is situated in the portion of the outer part (1) into which a portion of the inner part (2) is inserted.

4. A method according to one of Claims 2 and 3, **characterized in that** the plastics material is injected into one of the openings (6), whilst the air escapes from the interspace between the outer part (1) and the inner part (2) out of another opening (6).

5. A method according to one of Claims 2 and 3, **characterized in that** the air is drawn out of the interspace between the outer part (1) and the inner part (2) through one of the openings (6), so that the plastics material is introduced into the interspace through another opening (6).

6. A method according to one of Claims 1 to 5, **characterized in that** sealing rings, which are arranged around the inner part (2), are used as the sealing members (5).

7. A method according to one of Claims 1 to 6, **characterized in that** inflatable seals are used as the sealing members (5).

8. A method according to one of Claims 1 to 7, **characterized in that** either the outside of the portion of the inner part (2) insertable into the outer part (1) or the inside of the portion of the outer part (1) receiving this portion of the inner part (2) is treated in such a way that after the method step of injection or introduction the plastics-material layer (3) adheres to the surface treated in this way.

9. A method according to Claim 8, **characterized in that** the surface of one of the two parts (1, 2), to which the plastics-material layer (3) adheres after the spraying, is treated by roughening in the region of the portions displaceable one into the other.

10. A method according to Claim 8 or 9, **characterized in that** the surface of one of the two parts (1, 2), to which the plastics-material layer (3) adheres after the spraying, is treated by being provided with projections, dents or knobs in the region of the portions displaceable one into the other.

11. A method according to one of Claims 1 to 10, **characterized in that** at least one tongue (4), the length of which is preferably greater than that of the portions of the outer part (1) and the inner part (2) displaceable one into the other, is inserted into the interspace between the outer part (1) and the inner part (2), wherein the at least one tongue (4) is withdrawn from the interspace again after the injection or introduction of the plastics material.

12. A method according to Claim 11, **characterized in that** the at least one tongue (4) consists of metal.

13. A method according to one of Claims 1 to 12, **characterized in that** polytetrafluoroethylene is used as the plastics material.

14. A method according to Claim 13, **characterized in that** rings of polytetrafluoroethylene supported on the outer part (1) or the inner part (2) are used as the sealing members (5).

15. A method according to one of the preceding Claims, **characterized in that** the outer part (1) and the inner part (2) have a flat, oval cross-section in the region of the portions thereof displaceable one into the other.

16. A method according to one of Claims 1 to 14, **characterized in that** the outer part (1) and the inner part (2) have a triangular or polygonal cross-section in the region of the portions thereof displaceable one into the other.

17. A method according to one of Claims 1 to 14, **characterized in that** the outer part (1) and the inner part (2) have a substantially cruciform or cloverleaf-shaped cross-section in the region of the portions thereof displaceable one into the other.

## Revendications

1. Procédé pour la réalisation d'une couche en matière synthétique (3), qui peut être disposée entre deux pièces (1, 2) pouvant au moins par sections coulisser l'une par rapport à l'autre, les deux pièces comprenant une pièce extérieure en forme de douille (1) et une pièce intérieure (2) pouvant coulisser au moins partiellement à l'intérieur de celle-ci et la section de la pièce extérieure (1) et/ou de la pièce intérieure (2) étant approximativement constante dans la zone de leurs sections coulissant l'une dans l'autre et sur la longueur de celles-ci, **caractérisé par** les étapes suivantes :
- avec une pièce intérieure (2), dont au moins une section est introduite dans la pièce extérieure (1), l'interstice entre la pièce extérieure (1) et la pièce intérieure (2) est rendu étanche à l'aide d'éléments d'étanchéité appropriés (5),
- la matière synthétique formant la couche de matière synthétique (3) est injectée ou attirée dans l'interstice par au moins une ouverture (6), l'au moins une ouverture (6) étant disposée dans les éléments d'étanchéité (5).

2. Procédé selon la revendication 1, **caractérisé en ce qu'**au moins deux ouvertures (6) sont prévues.

3. Procédé selon l'une des revendications 1 à 2, **caractérisé en ce que** l'ouverture (6) ou au moins l'une des ouvertures (6) est disposée dans la section de la pièce extérieure (1) dans laquelle est introduite une section de la partie intérieure (2).

4. Procédé selon l'une des revendications 2 à 3, **caractérisé en ce que** la matière synthétique est injectée dans l'une des ouvertures (6) tandis que l'air contenu dans l'interstice entre la pièce extérieure (1) et la pièce intérieure (2) s'échappe par une autre ouverture (6).

5. Procédé selon l'une des revendications 2 à 3, **caractérisé en ce que** l'air contenu dans l'interstice entre la pièce extérieure (1) et la pièce intérieure (2) est aspiré par l'une des ouvertures (6), la matière synthétique étant attirée dans l'interstice par une autre ouverture (6).

6. Procédé selon l'une des revendications 1 à 5, **caractérisé en ce que** des bagues d'étanchéité disposées autour de la pièce intérieure (2) sont utilisées comme éléments d'étanchéité (5).

7. Procédé selon l'une des revendications 1 à 6, **caractérisé en ce que** des bagues d'étanchéité gonflables sont utilisées comme éléments d'étanchéité (5).

8. Procédé selon l'une des revendications 1 à 7, **caractérisé en ce que**, soit le côté extérieur de la section de la pièce intérieure (2) pouvant être introduite dans la pièce extérieure (1), soit le côté intérieur de la section de la partie extérieure (1) recevant cette section de la partie intérieure (2) est traité de manière à ce que la couche de matière synthétique (3) adhère à la surface ainsi traitée après l'étape d'injection ou d'introduction par attraction.

9. Procédé selon la revendication 8, **caractérisé en ce que** la surface de l'une des deux pièces (1, 2), sur laquelle la couche de matière synthétique (3) adhère après l'application par pulvérisation, fait l'objet d'un traitement pour la rendre rugueuse dans la zone des sections pouvant coulisser l'une dans l'autre.

10. Procédé selon la revendication 8 ou 9, **caractérisé en ce que** la surface de l'une des deux pièces (1, 2), sur laquelle la couche de matière synthétique (3) adhère après l'application par pulvérisation, fait l'objet d'un traitement de mise en place de saillies, de déformations ou de bossages dans la zone des sections pouvant coulisser l'une dans l'autre.

11. Procédé selon l'une des revendications 1 à 10, **caractérisé en ce qu'**au moins une languette (4), dont la longueur est de préférence plus importante que celle des sections de la pièce extérieure (1) et de la pièce intérieure (2) pouvant coulisser l'une dans l'autre, est introduite dans l'interstice entre la pièce extérieure (1) et la pièce intérieure (2), l'au moins une languette (4) étant à nouveau retirée de l'interstice après l'injection ou l'introduction par attraction de la matière synthétique.

12. Procédé selon la revendication 11, **caractérisé en ce que** l'au moins une languette (4) est composée de métal.

13. Procédé selon l'une des revendications 1 à 12, **caractérisé en ce que** la matière synthétique est du polytétrafluoréthylène.

14. Procédé selon la revendication 13, **caractérisé en ce que** des bagues de polytétrafluoréthylène s'appuyant sur la pièce extérieure (1) ou sur la pièce intérieure (2) sont utilisées comme éléments d'étanchéité (5).

15. Procédé selon l'une des revendications précédentes, **caractérisé en ce que** dans la zone de leurs sections pouvant coulisser l'une dans l'autre la pièce extérieure (1) et la pièce intérieure (2) ont une section plate ovale.

16. Procédé selon l'une des revendications 1 à 14, **caractérisé en ce que** dans la zone de leurs sections pouvant coulisser l'une dans l'autre la pièce extérieure (1) et la pièce intérieure (2) ont une section triangulaire ou polygonale.

17. Procédé selon l'une des revendications 1 à 14, **caractérisé en ce que** dans la zone de leurs sections pouvant coulisser l'une dans l'autre la pièce extérieure (1) et la pièce intérieure (2) ont une section à peu près cruciforme ou en forme de feuille de trèfle.
